Europäisches Patentamt

(19) European Patent Office

Office européen des brevets

(11) **EP 0 997 801 B1**

(12) **EUROPÄISCHE PATENTSCHRIFT**

(45) Veröffentlichungstag und Bekanntmachung des Hinweises auf die Patenterteilung:
**27.10.2004 Patentblatt 2004/44**

(51) Int Cl.⁷: **G05B 19/404**

(21) Anmeldenummer: **99115551.6**

(22) Anmeldetag: **06.08.1999**

(54) **Lineare Vorschubantrieb-Einrichtung für Bearbeitungswerkzeuge**

Linear drive means for machining tools

Méchanisme d'avancement linéaire pour outils d'usinage

(84) Benannte Vertragsstaaten:
**AT BE CH CY DE DK ES FI FR GB GR IE IT LI LU MC NL PT SE**

(30) Priorität: **27.10.1998 DE 19849384**

(43) Veröffentlichungstag der Anmeldung:
**03.05.2000 Patentblatt 2000/18**

(73) Patentinhaber: **IHT Automation GmbH & Co. KG 76532 Baden-Baden (DE)**

(72) Erfinder: **Schmall, Karl Heinz 76532 Baden-Baden (DE)**

(74) Vertreter: **Reule, Hanspeter et al Wolf & Lutz Patentanwälte Lessingstrasse 12 76530 Baden-Baden (DE)**

(56) Entgegenhaltungen:
**EP-A- 0 297 031          WO-A-97/37522
DE-A- 3 341 964          DE-A- 3 538 288**

**Beschreibung**

Es sind seit langer Zeit mechanische, hydraulisch oder elektromotorisch angetriebene Vorschubantriebe für lineare Werkzeugbewegungen bekannt, die die Aufgabe erfüllen, ein Bearbeitungswerkzeug, z. B. einen Schweißbrenner oder eine Beschichtungsspritzdüse, zu einem Werkstück unterschiedlicher Beschaffenheit hin zu bewegen und dort in einem bestimmten, für den Bearbeitungsprozeß optimalen Abstand während dieses Prozesses zu führen. Für diese Führung werden in bekannter Weise Regelungssysteme verwendet, die über eine abstandssensive Sensorik im Regelkreis den gewünschten Werkzeug-/Werkstückabstand aufrechterhalten.

In vielen Fällen kann die vorhandene Abstands-Sensorik auch dazu verwendet werden, um das Werkzeug aus seiner Ausgangsstellung heraus in einen Abstand zum Werkstück zu bringen, der für den Beginn des Arbeitsprozesses von Bedeutung ist. Beispiel hierfür ist eine kapazitive oder induktive, berührungslos funktionierende Abstands-Sensorik bei thermischen Schweiß- und Brennschneidprozessen und bei Verbindungsprozessen, wie beim Nieten von Fahrzeugbauteilen. Hier wird eine kapazitive Sensor-Elektrode oder eine induktive Sensorspule über eine Elektronik so mit dem Werkzeugantrieb verbunden, daß sie die Bewegung des Werkzeugs aus seiner Ausgangsstellung zum metallischen Werkstück hin mit vollzieht.

Beim Annähern an das Werkstück verändert sich das Ausgangssignal der Sensorik, die der kapazitiven Elektrode oder der induktiven Sensorspule nachgeschaltet ist. Beim Annähern an einen bestimmten, einstellbaren Sollabstand wird durch dieses Signal, welches im allgemeinen ein abstandabhängiges Analogsignal ist, der Vorschubantrieb zunehmend verlangsamt und beim Erreichen des Sollabstandes im Regelzustand stillgesetzt. Anschließend wird das Werkzeug, z. B. ein Schweiß- oder Schneidbrenner oder ein Nieteinsetz- und Vernietwerkzeug, in die definierte Arbeitslage gebracht. Danach beginnt der Arbeitsprozeß.

Beim Einsatz solcher kapazitiven oder induktiven Sensorsysteme ergibt sich jedoch das Problem, daß die berührungslosen Sensoren eine bestimmte Fläche oder Größe besitzen und nur dann genaue Abstands-Analogspannungen liefern, wenn sie mindestens gleich großen, ebenen Metallflächen an der Werkstückoberfläche gegenüberstehen. Dadurch ist es nicht möglich, das Werkzeug an Werkstückkanten oder an kleinen Werkstück-Oberflächen genau zu positionieren. Das gleiche Problem verhindert auch die genaue Abstandsführung des Werkstückes während des Bearbeitungsprozesses, wenn das Werkstück in Materialkanten-Nähe oder auf schmalen Werkstück-Formen geführt werden muß.

In den meisten Fällen, insbesondere beim Schweißen und Schneiden von Metallwerkstücken, sind die Werkzeuge röhrenförmig, drahtförmig oder düsenförmig ausgebildet und weisen im Vergleich zu den Werkstücken nur sehr geringe Abmessungen auf. Es liegt deshalb nahe, das Werkzeug selbst als taktilen Sensor zu nutzen, um auch an Werkstückkanten und geringer Fläche der Werkstücke eine genaue Erstposition vor Beginn des Bearbeitungsprozesses zu finden. Es sind Einrichtungen bekannt, bei denen das Werkzeug durch die lineare Vorschubantriebs-Einrichtung langsam auf das Werkstück zubewegt wird, bis eine Berührung der metallischen Werkzeugspitze, beispielsweise einer Brennerdüse, mit dem Werkstück einen galvanischen Kontakt zwischen beiden herstellt, der es ermöglicht, ein elektrisches Schaltsignal zu erzeugen und dadurch den Antrieb stillzusetzen. Der Nachteil solcher Einrichtungen ist, daß die Vorschubgeschwindigkeit bis zum Aufsetzen des Werkzeugs auf das Werkstück stark herabgesetzt werden muß, damit die empfindliche Vorderseite des Werkzeuges, z. B. eine Schneiddüse, keinen Schaden leidet. Die beim Aufsetzen entstehende Kraft entspricht dem Gesetz

$$F = m \cdot b \ (\text{Masse x Beschleunigung})$$

Die beim Aufsetzen wirkende Masse ist bei diesen Antrieben die gesamte in Bewegung befindliche Masse von Antriebsmotor, Linearantriebs-Masse und Werkzeugmasse, jeweils bezogen auf die Düse als taktilen Sensor. Um die Kraft F im zulässigen Rahmen zu halten, muß die Beschleunigung b möglichst klein werden. Siehe z.B. EP-A-0 297 031.

Geregelte Vorschubantriebe sollen möglichst "steif" sein, um Verzögerungszeiten und mechanische Hysterese auf Minimum zu halten. Wenn bei solchen Einrichtungen die Düsen-Aufsetzkraft ein bestimmtes Maß nicht überschreiten darf, ist ersichtlich, daß die Vorschubgeschwindigkeit sehr klein sein muß, um die Stillsetz-Beschleunigung in Grenzen zu halten. Diese Forderung aber bedeutet erheblichen Zeitverlust im Arbeitszyklus der Maschine.

Eine andere bekannte Einrichtung nützt den Stromanstieg des Vorschubantrieb-Motors beim Aufsetzen des Werkzeuges infolge höheren Drehmomentes beim Aufbringen der Aufsetzkraft F. Besonders solche Einrichtungen zeigen den erheblichen Nachteil, daß sich dabei die gesamten Trägheitsmomente des Vorschubs in den Abschaltvorgang hinein auswirken und daß ein feinfühliges Auswerten des Stromanstieges im Motorkreis wegen der gleichzeitigen Forderung nach schneller Regelung des Antriebs im Regelzustand mit entsprechend schnellen und intensiven Stromanstiegen nicht erreichbar ist, so daß auch hier mit geringen Vorschubgeschwindigkeiten gearbeitet werden muß und entsprechend hohe Verlustzeiten im Arbeitszyklus unvermeidbar sind.

Der vorliegenden Erfindung liegt die Aufgabe zugrunde, diese Nachteile zu vermeiden und eine lineare Vorschubantrieb-Einrichtung für Bearbeitungswerkzeuge mit integrierter taktiler Fühleinrichtung für Erst-Positionierungsvorgänge am Werkstück vor Beginn des Bearbeitungsprozesses und integrierter Gewichtsentlastung zu schaffen, die durch ihren besonderen Aufbau wesentliche Vorteile bei der Einstellung des Werkzeuges aufweist.

Die Lösung der gestellten Aufgabe erfolgt durch eine lineare Vorschubantrieb-Einrichtung gemäß Anspruch 1.

Diese weist den wesentlichen Vorteil auf, daß die Linearführung aus zwei gegeneinander verschiebbaren Elementen besteht, wobei ein Element mit dem Antriebsmotor unmittelbar in Verbindung steht, während das andere gegenüber dem erstgenannten Element verschiebbar gelagert ist und eine geringe Trägheitsmasse aufweist. Das zweite linear verschiebbare Element trägt das Werkzeug über einen entsprechenden Werkzeughalter. Das eine mit dem Antriebsmotor/Getriebe verbundene, angetriebene lineare Element ist gegen das zweite, das Werkzeug tragende lineare Führungselement durch eine Feder verspannt. Im normalen Vorschubfall verschieben sich beide lineare Elemente in ihrer Führung nicht gegeneinander. Sobald jedoch das werkzeugtragende Element in seiner linearen Bewegung gehemmt wird, verschiebt es sich gegen die Federkraft gegenüber dem angetriebenen Element.

Dieser Zustand tritt dann ein, wenn das Werkzeug auf das Werkstück aufsetzt. Infolge der geringen Trägheitsmomente des dann stillgesetzen werkzeugtragenden Führungselementes tritt nur eine entsprechend geringe Aufsetzkraft F am Werkzeug auf. Dadurch wird dieses bestmöglich geschont. Die hohen Trägheitsmomente des Motors und der übrigen Teile des Linearantriebes, nämlich des Getriebes und des angetriebenen linearen Elementes, werden beim Auslaufen des nachgeschalteten Motors abgebaut und wirken sich nicht auf die Aufsetzkraft F aus.

In den Unteransprüchen sind wertvolle Bereicherungen des Gegenstandes gemäß Anspruch 1 angeführt. Diese beziehen sich insbesondere auf die Ausbildung der Führungselemente, der Antriebseinrichtungen, der Steuereinrichtungen und der Einrichtungen zur Erzeugung elektrischer Signale bei der Verschiebung beider linearer Elemente gegeneinander.

Gemäß der Erfindung wird nach dem Zurücklegen eines genau bestimmten Verschiebeweges zwischen linearem Antriebselement und linearem werkzeugtragendem Führungselement ein elektrisches Signal erzeugt, das zum Stillsetzen des Motorantriebes verwendet wird. Zur Erzeugung dieses elektrischen Signals wird bei der Verschiebung beider linearer Elemente ein wegabhängiges Analogsignal dadurch erzeugt, daß ein lineares Potentiometer oder ein über die Zahnstange oder einen Seiltrieb angetriebenes Drehpotentiometer betätigt wird, dessen Stellung, und damit dessen Ausgangsspannung, der relativen Verschiebung beider linearer Elemente gegeneinander entspricht. Diese Ausgangsspannung wird zum Verlangsamen und Nullsetzen des Antriebsmotors in den Regelkreis eingespeist, so daß der Motor bei einem bestimmten Verschiebeweg beider linearer Elemente zum Stillstand kommt.

Zu einer weiteren Ausbildung der Erzeugung des wegabhängigen elektrischen Signals ist gemäß Anspruch 13 ein Wegimpulsgeber vorgesehen, der den relativen Verschiebungsweg der linearen Elemente in inkrementale Impulse umsetzt. Über die digitale Signalverarbeitung des Motor-Antriebssystems wird die Motordrehzahl in bekannter Weise stillgesetzt.

Für das Erzeugen des Abschaltsignals für den Motorantrieb in der erfindungsgemäßen Einrichtung wird die Anbringung eines Schalters gemäß Anspruch 15 beschrieben, der ein Abschaltsignal für den Motorantrieb erzeugt. Bei einer bestimmten geringen relativen Verschiebung der beiden linearen Elemente gegeneinander wird ein berührungsloser elektronischer oder berührender mechanischer Positionsschalter betätigt, dessen Schalthysterese sehr klein ist. Das dadurch erzeugte Schaltsignal schaltet den Motorantrieb ab, der danach je nach Intensität des Bremsvorganges im Bereich des relativen Verschiebeweges ausläuft.

Anhand der Zeichnungen soll am Beispiel bevorzugter Ausführungsformen die Vorschubantrieb-Einrichtung gemäß der Erfindung näher erläutert werden.

In den Zeichnungen zeigt

**Fig. 1**

den prinzipiellen, grundsätzlichen Aufbau der erfindungsgemäßen linearen Vorschubantrieb-Einrichtung am Beispiel eines Ritzel-Zahnstangengetriebes.

**Fig. 2**

zeigt eine andere Ausführung der erfindungsgemäßen Einrichtung in prinzipieller Darstellung.

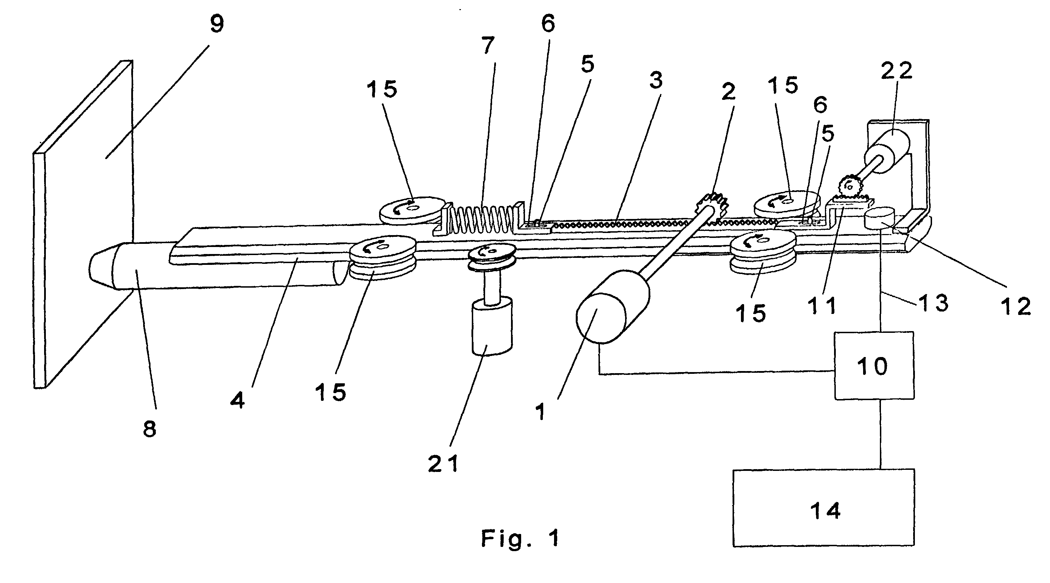

Wie sich aus Fig. 1 ergibt, besteht die Vorschubantrieb-Einrichtung im wesentlichen aus einem elektrischen Motorantrieb 1, der ein Antriebsritzel 2 aufweist, das in die Zahnstange 3 als angetriebenes Element eingreift. Die Zahnstange ist gegenüber der Schlittenführung 4 als zur Führung des Werkzeuges 8 dienendes Element mittels Führungsschlitzen 5 und Führungszapfen 6 verschiebbar gelagert. Damit kann sich die Zahnstange gegenüber der Schlittenführung 4 gegen den Druck der Feder 7 parallel zur Schlittenführung 4 gegen das Werkstück 9 verschieben. Die Führungsrollen der Schlittenführung 4 sind mit 15 bezeichnet. Die Montageebene dieser Führungsrollen ist aus Gründen der Übersichtlichkeit nicht besonders dargestellt.

Der Motor 1 des Antriebs wird über die Motorsteuerung 10 aktiviert. An der Zahnstange 3 ist eine metallische Schaltfahne 11 angebracht, die bei der Verschiebung der Zahnstange 3 an der Schlittenführung 4 sich relativ zu dieser mitverschiebt und den elektronischen berührungslosen Schalter 12 bei Erreichen einer bestimmten Wegposition aktiviert. Das Schaltsignal des Schalters 12 wird über die Verbindung 13 zur Motorsteuerung 10 weitergegeben. Dort wird das Abschalten des Motors bewirkt, und die weiteren Prozeßsequenzen werden eingeleitet. Die Motorsteuerung 10 ist ferner mit der allgemeinen Maschinenprozeßsteuerung 14 verbunden.

Anstelle der Schaltfahne 11 und des Schalters 12 kann erfindungsgemäß auch ein Potentiometer oder ein Winkelschrittgeber 22 angebracht sein, der die Relativbewegung zwischen den beiden linearen Elementen in elektrische Signale umsetzt, die zur Erzeugung des Schallsignals verwendet werden. In Fig. 1 ist mit 21 ein solches Wegmeßsystem für den gesamten Verschiebeweg dargestellt.

In Abwandlung des oben angeführten Ausführungsbeispiels der Einrichtung gemäß der Erfindung kann anstelle der Schlittenführung mit Führungsrollen 15 eine Kugelumlaufschlittenführung vorgesehen werden, bei der die Führungsbahn fest montiert ist und die linearen Führungsglieder als auf dieser Bahn entlanglaufende, kugelgelagerte Schlitten ausgeführt sind.

Ebenso kann eine Kugelkäfigführung oder eine runde Kugelführung verwendet werden, bei denen das lineare Führungselement ein zylindrischer Körper ist. In anderen Ausführungsbeispielen können die angetriebenen Elemente konzentrisch zu den werkzeugtragenden Elementen angeordnet sein.

Bei der in Fig. 1 gezeigten Einrichtung kann auch der Vorschub mittels eines nicht dargestellten Linearmotors realisiert werden, ohne daß dadurch die erfindungsgemäße Funktion der Einrichtung verändert wird.

Bei der vertikalen Bewegung beider Elemente belastet das Gewicht des Werkzeuges 8 und seiner eventuell erforderlichen Leitungen, die die für den Bearbeitungsvorgang notwendigen Mittel dem Werkzeug zuführen, wie Gas, Wasser, Strom, Beschichtungsmittel, das werkzeugtragende lineare Element 4 zusätzlich in Richtung der Schwerkraft, also nach unten.

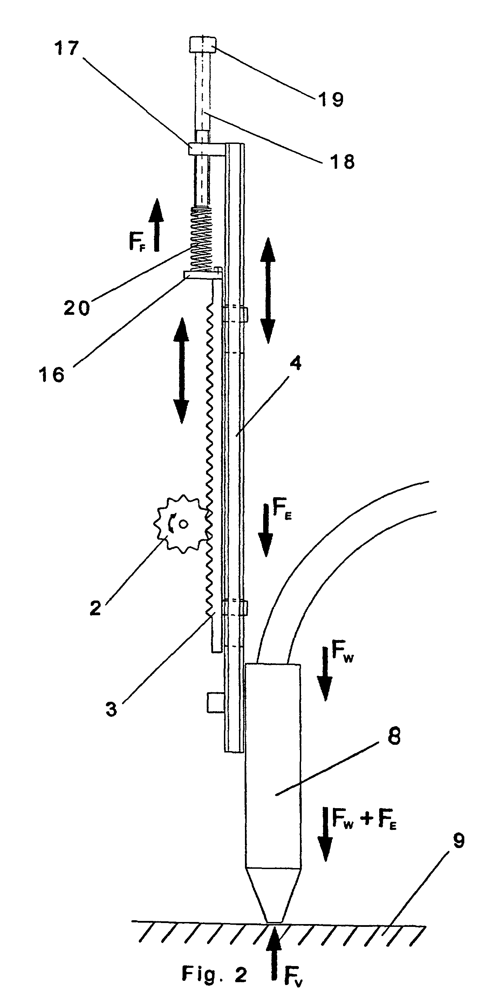

Um beim Aufsetzen des Werkzeuges 8 auf das Werkstück 9 die Aufsetzkraft F möglichst klein zu erhalten, wird erfindungsgemäß die Vorrichtung der beiden gegeneinander verschiebbaren Elemente zusätzlich mit einer Vorrichtung versehen, die einen Ausgleich des zusätzlichen Gewichtes durch das Werkzeug und dessen Zuführung ermöglicht. Diese Anordnung ist beispielhalber in Fig. 2 dargestellt. Das das Werkzeug 8 tragende Element 4 gleitet gegenüber der Zahnstange 3, die durch das Ritzel 2 angetrieben wird.. Am Ende der Zahnstange ist eine Platte 16 angebracht. In der gleichen Ebene befindet sich auf dem Element 4 eine Platte 17, in der ein Gewinde vorgesehen ist. Die Gewindestange 18 kann in diesem Gewinde vertikal mittels des Drehknopfes 19 verstellt werden und steht mit einer Druckfeder 20 in Verbindung.

Das Gewicht $F_W$ des Werkzeugs 8 zusammen mit dem Gewicht $F_E$ des werkzeugtragenden Elementes bewirken, daß bei ungespannter Feder 20 das werkzeugtragende Element nach unten gezogen wird und als Anschlag des zwischen Zahnstange 3 und dem werkzeugtragenden Element 4 möglichen Verschiebungsweges anliegt.

Sobald die Druckfeder zunehmend durch Drehen der Gewindespindel 18 mittels Drehknopf 19 gespannt wird, entsteht eine Gewichtsentlastung in Höhe der Federkraft $F_F$ zwischen den beiden linearen Elementen. Wenn $F_F = F_W + F_E$, ergibt sich völlige Gewichtsentlastung. Die dann noch zur langsamen Verschiebung der beiden linearen Elemente gegeneinander aufzubringende Kraft $F_V$ wird ein Minimum und liegt in der Höhe der zur Verschiebung zu überwindenden Reibungskraft zwischen beiden Elementen.

Die in Fig. 2 gezeigte Erweiterung der erfindungsgemäßen Einrichtung bewirkt wesentliche Vorteile gegenüber anderen taktilen oder kontaktgebenden Systemen zum Finden der Anfangsposition eines Werkzeuges auf der Oberfläche des Werkstückes. Wenn das Werkstück nämlich kein fester bzw. starrer Körper ist, sondern aus weichem oder dünnem Material besteht, wie Kunststoff oder Blech, so wird sich beim Aufsetzen des Werkzeuges auf das Werkstück infolge der Summenkraft $F_W + F_E$ die Lage des Werkstückes in Richtung dieser Summenkraft verändern. Die beim Auslösen des Schaltsignals durch Verschieben der linearen Elemente gegeneinander erreichte Position des Werkzeuges entspricht dann nicht mehr exakt der gewünschten Referenzposition der unbelasteten Werkstück-Oberfläche, so daß die davon abhängige Arbeitsposition des Werkzeuges fehlerhaft ist. Der Positionsfehler wird um so größer, je stärker das Werkstück beim Aufsetzen des Werkzeuges nachgibt, wächst also mit der Höhe der Summenkraft $F_W + F_E$, sofern keine Entlastung durch die Federkraft $F_F$ wirkt. Stellt man die Federkraft $F_F$ jedoch so ein, daß eine volle Kompensation der Summenkraft $F_W + F_E$ eintritt, so wird die Verformung des Werkstückes, und damit der Positionsfehler, ein Minimum.

Erfindungsgemäß wird nach Stillsetzen des Motorantriebes entweder in einer bestimmten Verschiebestellung bei der erstgenannten Ausbildung der analogen oder inkrementalen Vorschiebeweg-Messung oder in der unbestimmten Endstellung des Motors beim Abschalten durch ein digitales Schaltsignal der Antriebsmotor in der gegenläufigen Drehrichtung wieder aktiviert, so daß die relative Verschiebung beider linearer Elemente verringert wird, bis beide Elemente wieder in die ursprüngliche Lage zurückgekehrt sind bzw. das digitale Schaltsignal zurückgesetzt wird. Bei den beiden erstgenannten Ausbildungen kann der Motorantrieb direkt allmählich wieder gegen Null gefahren werden, so daß die dann erreichte Stellung des angetriebenen Elementes genau der Werkzeugposition beim Aufsetzen auf das Werkstück entspricht. Beim Beispiel der Ausbildung einem Positionsschalter verbleibt ein geringer definierter Restweg zwischen der Position beim Rückschalten des Signals und der Position beim Aufsetzen des Werkzeuges auf das Werkstück.

Die erfindungsgemäße lineare Vorschubantrieb-Einrichtung ist zusätzlich mit einem elektronischen Wegmeßsystem für den gesamten Verschiebeweg des werkzeugtragenden linearen Elementes ausgerüstet. Für dieses Wegmeßsystem kann in bekannter Weise entweder eine analoge absolute Potentiometer-Wegmeßeinrichtung oder eine ebenfalls bekannte inkrementale oder absolute digitale Impuls- bzw. Mehrfachsignal-Wegmessungseinrichtung verwendet werden.

Dieses Wegemeßsystem wird verwendet, um die genaue Arbeitsposition des Werkzeuges am Werkstück nach Abschluß der Anfangspositionsfindung, gekennzeichnet durch Berührung des Werkzeuges mit dem Werkstück, einzustellen. Durch die mechanische Kopplung des Wegmeßsystems mit dem werkzeugtragenden linearen Element erkennt das System jederzeit die genaue Position des linearen Vorschubantriebs in bezug auf eine Ausgangs-Referenzposition. Diese wird in üblicher Weise durch Anfahren eines Endschalters in der Ausgangsposition des Vorschubantriebes signalisiert. Sobald die anschließende Anfangspositionsfindung abgeschlossen ist, wird deren Position vom Wegmeßsystem in die Vorschub-Antriebs-Steuerung in bekannter Weise als weitere Referenzposition für die Anfangsposition übertragen.

Durch Eingabe eines auf dieser Referenzposition bezogenen Positions-Veränderungswertes durch die Maschinensteuerung wird in bekannter Weise nun die dadurch charakterisierte neue Position angefahren, die der nächsten Arbeitsposition des Werkzeuges entspricht. Anschließend beginnt der Arbeitsprozeß. Für die dann erforderliche Abstands-Sensorik des Regelkreises werden bei Plasma-Brennschneidanlagen Sensorsyteme eingesetzt, die die abstandsabhängige Lichtbogenspannung als Istwert des Abstandes auswerten. Diese Methode hat den Vorteil, daß der Lichtbogen selbst, also genau die Strecke zwischen Plasmaelektrode und Werkstück, als Sensorik-Quelle verwendet wird, somit auch kleine Werkstückflächen und Bearbeitung unmittelbar an Werkzeugkanten keine Veränderung der Sensorik-Signale hervorrufen und der gewünschte Abstand zwischen Elektrode/Düse auch unter diesen Umständen eingehalten werden kann.

Bei solchen lichtbogenspannungsabhängigen Sensorik-Systemen ist es besonders wichtig, daß der Anfangsabstand zwischen Elektrode/Düse und Werkstück genau positioniert wird, weil von diesen Referenzpositionen bzw. davon abhängigen Zwischenpositionen aus bei bestimmten Betriebsarten die für die Abstandsregelung maßgebende Lichtbogenspannung zuerst ermittelt werden muß, bevor sie dem Regelprozeß als Führungsgröße vorgegeben werden kann.

Die taktile Auffindung der Werkstück-Oberflächenposition kann selbstverständlich auch bei anderen Sensorik-Systemen verwendet werden, wie z. B. bei kapazitiven, induktiven, elektrooptischen oder elektroakustischen Sensoren, wenn es darauf ankommt, daß unabhängig von Sensoriksystemen eine genaue Anfangsposition erreicht werden muß.

## Patentansprüche

1. Lineare Vorschubantrieb-Einrichtung für Bearbeitungswerkzeuge mit integrierter taktiler Fühleinrichtung für Erst-Positionierungsvorgänge am Werkstück vor Beginn des Bearbeitungsprozesses und integrierter Gewichtsentlastung, *gekennzeichnet durch* mindestens zwei parallel geführte, unmittelbar nebeneinanderliegende und gegeneinander in Richtung des Vorschubweges verschiebbare Führungselemente (3, 4), von denen das eine (3) mit dem Antrieb (1, 2) der Einrichtung direkt verbunden ist und das andere (4) mit dem angetriebenen Werkzeug (8) verbunden ist, derart, daß der relativ zueinander mögliche Verschiebeweg innerhalb eines bestimmten Bereiches **durch** eine Kraftwirkung, z. B. **durch** das Eigengewicht der beiden linearen Elemente (3, 4), **durch** eine Federkraft oder ein Gegengewicht in einer definierten Lage begrenzt wird, wobei bei Einwirkung einer Kraft entgegen der Vorschubrichtung auf das werkzeugtragende lineare Element (4) dieses sich relativ zum angetriebenen linearen Element (3) über einen begrenzten Verschiebeweg verschieben läßt, und wobei elektrische Meldeeinrichtungen (11, 12) vorgesehen sind, die den Verschiebeweg oder eine bestimmte Position dieses Weges in elektrische Signale umsetzen, und **durch** eine zwischen den beiden linearen Elementen (3, 4) beispielsweise als Feder ausgebildete, einstellbare Kraftquelle, die in Richtung des Verschiebeweges wirkt und die zum Ausgleich der **durch** das Gewicht des Werkzeuges (8) und des werkzeugtragenden, linearen Elementes wirkenden Kraft dient.

2. Einrichtung nach Anspruch 1, *dadurch gekennzeichnet,* **daß** die Führungselemente (3, 4) aus schienenförmigen, zwischen Rollen (15) geführten, rohrförmigen oder runden, linearen Führungselementen bestehen.

3. Einrichtung nach Anspruch 1 und 2, *dadurch gekennzeichnet,* **daß** der Antrieb (1, 2) der Einrichtung aus einem Elektromotor (1) mit Getriebe zur Umsetzung der Drehbewegung in eine Linearbewegung besteht und die Meldeeinrichtungen (11, 12) aus Weggebern oder Schaltern bestehen.

4. Einrichtung nach Anspruch 1, 2 oder 3, *dadurch gekennzeichnet,* **daß** das angetriebene lineare Element aus einer Zahnstange (3) besteht, die unmittelbar am werkzeugtragenden Element (4) verschiebbar anliegt.

**5.** Einrichtung nach Anspruch 1, 2 oder 3, *dadurch gekennzeichnet,* **daß** das angetriebene Element (3) mittels eines Spindel-Mutter-Systems (17, 18) bewegt wird, und daß die Mutter unmittelbar oder über eine daran angebrachte Schiene direkt am werkzeugtragenden Element (4) anliegt.

**6.** Einrichtung nach Anspruch 1 bis 3, *dadurch gekennzeichnet,* **daß** das angetriebene lineare Element (3) durch einen Seilzug oder Bandzug am Getriebe bzw. am Motor (1) angetrieben wird und daß es unmittelbar am werkzeugtragenden Element (4) verschiebbar angeordnet ist.

**7.** Einrichtung nach einem oder mehreren der Ansprüche 1 bis 3, *dadurch gekennzeichnet,* **daß** zwischen dem angetriebenen linearen Element (3) und dem werkzeugtragenden Element (4) ein Gleitlager angeordnet ist.

**8.** Einrichtung nach einem oder mehreren der Ansprüche 1 bis 3, *dadurch gekennzeichnet,* **daß** zwischen dem angetriebenen linearen Element (3) und dem werkzeugtragenden Element (4) eine kugel- oder rollengelagerte Führung angeordnet ist.

**9.** Einrichtung nach einem oder mehreren der Ansprüche 1 bis 3, *dadurch gekennzeichnet,* **daß** der lineare Bewegungsweg des werkzeugtragenden Elementes (4) den vollen Vorschubweg der Einrichtung darstellt, wobei das angetriebene Element (3) relativ zum werkzeugtragenden Element (4) sich auf einem Teilweg verschieben läßt, wobei dieser Teilweg mindestens eine Wegbegrenzung durch einen mechanischen Anschlag aufweist, und daß dieser Anschlag die Referenzposition der beiden Elemente relativ zueinander darstellt.

**10.** Einrichtung nach einem der Ansprüche 1 bis 3, *dadurch gekennzeichnet,* **daß** die linearen Elemente (3, 4) stabförmig ausgebildet sind, und daß das werkzeugtragende Element (4) durch Kugelumlaufschlitten oder Rollenlager geführt ist.

**11.** Einrichtung nach einem der Ansprüche 1 bis 3, *dadurch gekennzeichnet,* **daß** die linearen Elemente als konzentrisch angeordnete Rohre ausgeführt sind.

**12.** Einrichtung nach einem der Ansprüche 1 bis 3, *dadurch gekennzeichnet,* **daß** zwischen den beiden linearen Elementen (3, 4) eine Druckfeder (20) in Richtung des Verschiebeweges angeordnet ist, die durch eine einstellbare Vorrichtung, beispielsweise eine manuell betätigte Gewindestange (18) so verändert werden kann, daß die von ihr auf das eine Element (3) relativ zum anderen Element (4) ausgeübte Kraft entlang des Verschiebeweges variabel ist und daß diese Kraft zur Entlastung von Kräften durch das Gewicht des Werkzeuges und des werkzeugtragenden Elementes (4) wirkt, und daß der variable Bereich der Federkraft so bemessen ist, daß bei senkrecht wirkenden Massekräften eine vollständige Kompensation des Gewichtes des Werkzeuges (8), seiner Zuleitungen und des werkzeugtragenden linearen Elementes erreicht wird.

**13.** Einrichtung nach einem oder mehreren der Ansprüche 1 bis 3 und 12, *dadurch gekennzeichnet,* **daß** der Verschiebeweg zwischen den beiden linearen Elementen (3, 4) durch einen elektrischen Weggeber in Form eines Potentiometers (22) oder eines Impulsweggebers in ein elektrisches proportionales Signal umgesetzt wird und daß dieses Signal auf den Motorregelkreis so aufgeschaltet wird, daß damit der Antrieb stillgesetzt werden kann, wenn ein bestimmter Verschiebeweg erreicht ist.

**14.** Einrichtung nach Anspruch 1 bis 3 und 12, *dadurch gekennzeichnet,* **daß** bei einer bestimmten Position des Verschiebeweges ein mechanisch betätigter Kontaktschalter mit kleiner Hysterese aktiv wird, der den Antrieb stillsetzt.

**15.** Einrichtung nach Anspruch 1 bis 12, *dadurch gekennzeichnet,* **daß** bei einer bestimmten Position des Verschiebeweges ein berührungslos wirkender, elektronischer Schalter geringer Hysterese aktiv wird, der den Antrieb stillsetzt.

**Claims**

**1.** Linear feed drive system for machining tools, comprising an integrated tactile sensor system for initial positioning processes on the workpiece prior to the start of the machining process and integrated weight relief, said linear feed drive system being **characterized by** at least two guide elements (3, 4) that are guided in parallel, lie directly next to one other and can be displaced with respect to one another in the feed direction, one (3) of said guide elements being directly connected to the drive (1, 2) of the system and the other (4) of said guide elements being connected to the driven tool (8), such that the displacement of said guide elements relative to one other within a defined range is limited in a defined position by the action of a force, e.g. by the intrinsic weight of the two linear elements (3, 4), by a spring force or a counterweight, wherein the action of a force counter to the feed direction on the tool-bearing linear element (4) allows the latter to move relative to the driven linear element (3) over a limited path of displacement, and wherein electric signalling devices (11, 12) are provided which convert the path of displacement or a defined position of this path into electrical signals, and by an adjustable source of force which is designed for example as a spring between the two linear elements (3, 4), acts in the direction of displacement and serves to compensate the force caused by the weight of the tool (8) and of the tool-bearing linear element.

2. System according to Claim 1, **characterized in that** the guide elements (3, 4) consist of rail-shaped linear guide elements, linear guide elements that are guided between rollers (15), tubular linear guide elements or round linear guide elements.

3. System according to Claims 1 and 2, **characterized in that** the drive (1, 2) of the system consists of an electric motor (1) with a gearing for translating the rotational movement into a linear movement, and the signalling devices (11, 12) consist of displacement transducers or switches.

4. System according to Claim 1, 2 or 3, **characterized in that** the driven linear element consists of a toothed rack (3) that bears directly against the tool-bearing element (4).

5. System according to Claim 1, 2 or 3, **characterized in that** the driven element (3) is moved by a spindle-and-nut system (17, 18), and **in that** the nut bears against the tool-bearing element (4) either directly or via a rail fitted thereto.

6. System according to Claims 1 to 3, **characterized in that** the driven linear element (3) is driven by a cable pull or tape pull on the gearing or motor (1), and **in that** it is arranged directly on the tool-bearing element (4) such that it can be displaced.

7. System according to one or more of Claims 1 to 3, **characterized in that** a slide bearing is arranged between the driven linear element (3) and the tool-bearing element (4).

8. System according to one or more of Claims 1 to 3, **characterized in that** a guide mounted on balls or rollers is arranged between the driven linear element (3) and the tool-bearing element (4).

9. System according to one or more of Claims 1 to 3, **characterized in that** the linear movement path of the tool-bearing element (4) represents the full feed path of the system, wherein the driven element (3) can be displaced relative to the tool-bearing element (4) over a part-path, wherein this part-path has at least one path limitation provided by a mechanical stop, and **in that** said stop represents the reference position of the two elements relative to one other.

10. System according to any of Claims 1 to 3, **characterized in that** the linear elements (3, 4) are bar-shaped, and **in that** the tool-bearing element (4) is guided by ball circulation carriages or roller bearings.

11. System according to any of Claims 1 to 3, **characterized in that** the linear elements are designed as concentrically arranged tubes.

12. System according to any of Claims 1 to 3, **characterized in that** a pressure spring (20) is arranged between the two linear elements (3, 4) in the direction of displacement, it being possible for said pressure spring to be adjusted by an adjustable device, for example a manually operated threaded bar (18), such that the force exerted by said spring on one element (3) relative to the other element (4) is variable along the path of displacement, and **in that** said force acts to relieve forces caused by the weight of the tool and the tool-bearing element (4), and **in that** the variable range of the spring force is dimensioned such that, in the event of mass forces acting perpendicularly, full compensation of the weight of the tool (8), its feed lines and the tool-bearing linear element is achieved.

13. System according to one or more of Claims 1 to 3 and 12, **characterized in that** the displacement between the two linear elements (3, 4) is converted by an electric displacement transducer in the form of a potentiometer (22) or a pulse displacement transducer into an electrical proportional signal, and **in that** this signal is applied to the motor control loop such that the drive can thus be shut down once a defined amount of displacement has been reached.

14. System according to Claims 1 to 3 and 12, **characterized in that** a mechanically actuated contact switch with low hysteresis becomes active at a defined position of displacement, said contact switch shutting down the drive.

15. System according to Claims 1 to 12, **characterized in that** a contactlessly acting electronic switch with low hysteresis becomes active at a defined position of displacement, said electronic switch shutting down the drive.

**Revendications**

1. Mécanisme d'avance linéaire pour outils d'usinage, avec un dispositif de détection tactile intégré pour des processus de positionnement initial sur la pièce à usiner avant le début du processus d'usinage et avec une décharge de poids intégrée, *caractérisé par* au moins deux éléments de guidage (3, 4) guidés en parallèle, directement côte à côte et déplaçables l'un par rapport à l'autre dans le sens de la course d'avance, dont l'un (3) est directement lié à l'entraînement (1, 2) du mécanisme et l'autre (4) est lié à l'outil (8) entraîné, de telle manière que la course de déplacement relative possible de l'un par rapport à l'autre est limitée dans un domaine défini par action d'une force, par exemple, par le poids propre des deux éléments linéaires (3, 4), par la force d'un ressort ou par un contrepoids dans une position définie, dans lequel, sous l'effet d'une force en sens opposé au sens d'avance sur l'élément linéaire portant l'outil (4), ce dernier se laisse déplacer sur une course de déplacement limitée par rapport à l'élément linéaire entraîné (3) et dans lequel il est prévu des dispositifs de signalisation électriques (11, 12) qui convertissent la course de déplacement ou une position définie de cette course en signaux électriques, et par une source de force réglable, par exemple constituée d'un ressort, entre les deux éléments linéaires (3,4), qui agit dans le sens de la course de déplacement et sert à la compensation de la force agissant du fait du poids de l'outil (8) et de l'élément linéaire portant l'outil.

2. Mécanisme selon la revendication 1, *caractérisé par le fait* **que** les éléments de guidage (3, 4) sont constitués d'éléments de guidage linéaire en forme de rails guidés entre des galets (15), en forme de tubes ou ronds.

3. Mécanisme selon les revendications 1 et 2, *caractérisé par le fait* **que** l'entraînement (1, 2) du mécanisme est un moteur électrique (1) avec une transmission pour convertir le mouvement de rotation en mouvement linéaire et que les dispositifs de signalisation (11, 12) sont des capteurs de déplacement ou des commutateurs.

4. Mécanisme selon la revendication 1, 2 ou 3, *caractérisé par le fait* **que** l'élément linéaire entraîné est formé d'une crémaillère (3) qui est directement en contact, de manière déplaçable, avec l'élément portant l'outil (4).

5. Mécanisme selon la revendication 1, 2 ou 3, *caractérisé par le fait* **que** l'élément linéaire entraîné (3) est déplacé au moyen d'un système vis-écrou (17, 18) et que l'écrou est en contact directement ou par l'intermédiaire d'un rail fixé dessus avec l'élément portant l'outil (4).

6. Mécanisme selon les revendications 1 à 3, *caractérisé par le fait* **que** l'élément linéaire entraîné (3) est entraîné par un câble ou une bande sur la transmission ou sur le moteur (1) et qu'il est monté directement, de manière déplaçable, sur l'élément portant l'outil (4).

7. Mécanisme selon l'une ou plusieurs des revendications 1 à 3, *caractérisé par le fait* **qu'**un palier lisse ou de guidage est disposé entre l'élément linéaire entraîné (3) et l'élément portant l'outil (4).

8. Mécanisme selon l'une ou plusieurs des revendications 1 à 3, *caractérisé par le fait* **qu'**un guide monté sur roulement à billes ou à rouleaux est disposé entre l'élément linéaire entraîné (3) et l'élément portant l'outil (4).

9. Mécanisme selon l'une ou plusieurs des revendications 1 à 3, *caractérisé par le fait* **que** la course de déplacement linéaire de l'élément portant l'outil (4) représente la course d'avance totale du mécanisme, l'élément entraîné (3) se déplaçant sur une course partielle par rapport à l'élément portant l'outil (4), cette course partielle présentant au moins une limitation de course par une butée mécanique, et que cette butée représente la position de référence des deux éléments l'un par rapport à l'autre.

10. Mécanisme selon l'une des revendications 1 à 3, *caractérisé par le fait* **que** les éléments linéaires (3, 4) sont en forme de barre et que l'élément portant l'outil (4) est guidé par des chariots à recirculation de billes ou par des roulements à rouleaux.

11. Mécanisme selon l'une des revendications 1 à 3, *caractérisé par le fait* **que** les éléments linéaires sont formés de tubes concentriques.

12. Mécanisme selon l'une des revendications 1 à 3, *caractérisé* **par** *le fait* **qu'**un ressort de compression (20) est disposé dans le sens de la course de déplacement entre les deux éléments linéaires (3, 4), lequel ressort peut être modifié par un dispositif réglable, par exemple une tige filetée (18) actionnée à la main, de telle manière que la force qu'il exerce sur un élément (3) par rapport à l'autre élément (4) est variable le long de la course de déplacement et que cette force agit pour décharger les forces dues au poids de l'outil et de l'élément portant l'outil (4), et que la plage variable de la force du ressort est dimensionnée de manière à obtenir une compensation totale du poids de l'outil (8), de ses lignes d'alimentation et de l'élément linéaire portant l'outil pour des forces de masse agissant verticalement.

13. Mécanisme selon l'une ou plusieurs des revendications 1 à 3 et 12, *caractérisé par le fait* **que** la course de déplacement entre les deux éléments linéaires (3, 4) est convertie en un signal électrique proportionnel par un capteur de déplacement prenant la forme d'un potentiomètre (22) ou d'un capteur de déplacement à impulsions et que ce signal est appliqué dans la boucle d'asservissement du moteur de telle manière que l'entraînement puisse être arrêté quand une course de déplacement définie est atteinte.

**14.** Mécanisme selon les revendications 1 à 3 et 12, *caractérisé par le fait* **qu'**à une position définie de la course de déplacement, un commutateur de contact mécanique de faible hystérésis devient actif et arrête l'entraînement.

**15.** Mécanisme selon les revendications 1 à 12, *caractérisé par le fait* **qu'**à une position définie de la course de déplacement, un commutateur électronique de faible hystérésis, fonctionnant sans contact, devient actif et arrête l'entraînement.

Fig. 1

Fig. 2